# EUROPÄISCHE PATENTSCHRIFT

(11) **EP 3 997 665 B1**
(45) Veröffentlichungstag und Bekanntmachung des Hinweises auf die Patenterteilung: **04.09.2024**
(21) Anmeldenummer: 20739954.4
(22) Anmeldetag: 10.07.2020
(51) Int. Cl.: G06T 11/00, G06T 17/20

(54) **VERFAHREN ZUR ERZEUGUNG VON OBERFLÄCHENDATEN UND VORRICHTUNG HIERZU**
METHOD FOR GENERATING SURFACE DATA AND DEVICE FOR THIS PURPOSE
PROCÉDÉ DE GÉNÉRATION DE DONNÉES DE SURFACE ET DISPOSITIF ASSOCIÉ

(30) Priorität: 10.07.2019 DE 102019118667
(43) Veröffentlichungstag der Anmeldung: 18.05.2022
(73) Patentinhaber: Carl Zeiss GOM Metrology GmbH, 38122 Braunschweig (DE)
(72) Erfinder: OERTEL, Eric, 38104 Braunschweig (DE); WEDEKIND, Markus, 38118 Braunschweig (DE)
(74) Vertreter: Kröncke, Rolf
(86) Internationale Anmeldenummer: PCT/EP2020/069479
(87) Internationale Veröffentlichungsnummer: WO 2021/005192

(56) Entgegenhaltungen:
- YUKIE NAGAI ET AL: "Accurate surface extraction on CT volume using analytical gradient of FDK formula", 9TH CONFERENCE ON INDUSTRIAL COMPUTED TOMOGRAPHY, 13 February 2019 (2019-02-13), Padova, Italy, pages 1 - 8, XP055730296
- CHRISTOPH HEINZL ET AL: "Reproducible Surface Extraction for Variance Comparison in 3D Computed Tomography", 9TH EUROPEAN CONFERENCE ON NDT - SEPTEMBER 2006 - BERLIN (GERMANY) (ECNDT 2006), November 2006 (2006-11-01), Berlin, Germany, pages 1 - 8, XP055730501, Retrieved from the Internet <URL:https://www.ndt.net/article/ecndt2006/doc/We.3.3.4.pdf> [retrieved on 20200914]

## Beschreibung

Die Erfindung betrifft ein Verfahren zur Erzeugung von Oberflächendaten eines Objektes mit Projektionsbildern, die durch computertomografische Vermessung des in den Strahlengang zwischen einer Strahlungsquelle und einer Detektoreinheit positionierten Objektes erfasst wurden, sowie eine zur Durchführung des Verfahrens geeignete Vorrichtung.

Messeinrichtungen zur computertomografischen Vermessung eines Objektes kommen inzwischen verstärkt im industriellen Umfeld zur Prüfung von Werkstücken zum Einsatz.

Eine typische Messeinrichtung zur computertomografischen Vermessung eines Objektes beinhaltet dabei zumindest eine Strahlungsquelle (Quelle invasiver Strahlung, zum Beispiel eine Röntgenquelle), eine Positionierungsvorrichtung zur Positionierung und Bewegung des Objektes (Manipulationssystem, beispielsweise ein Drehtisch) und eine Detektoreinheit (beispielsweise ein Flat-Panel-Detektor).

Um ein Objekt computertomografisch zu vermessen, wird dieses beispielsweise mit Hilfe der Positionierungsvorrichtung im Strahlengang zwischen der Strahlungsquelle und der Detektoreinheit positioniert. Je nach Material und Materialstärke wird die invasive Strahlung der Strahlungsquelle unterschiedlich stark beim Durchdringen des Objektes abgeschwächt. Die Detektoreinheit erfasst Daten (Projektionsbilder), die ein zweidimensionales Abbild des Objektes repräsentieren. Das Objekt wird mit Hilfe der Positionierungsvorrichtung in eine andere Position gebracht und es werden weitere Daten aufgenommen. Zur Vermessung eines Objektes ist es üblich, Daten in bis zu mehreren hundert unterschiedlichen Positionen des Objektes aufzunehmen, beispielsweise indem sich das Objekt auf einem Drehtisch befindet und zwischen den Aufnahmen um einen vorgegebenen Winkel rotiert.

Aus den Projektionsbildern kann mit Hilfe eines Rekonstruktionsalgorithmus ein Volumendatensatz berechnet werden, der das Objekt dreidimensional beschreibt. Die Volumendaten setzen sich dabei aus einer Vielzahl einzelner Volumenelemente zusammen, die häufig auch als Voxel bezeichnet werden. In jedem Voxel kann unter anderem auch die Information über eine Materialdichte dieses Volumenelementes gespeichert sein. Die unterschiedlichen Dichtedaten, die in jedem Voxel gespeichert sind, werden beispielsweise durch unterschiedliche Grauwerte dargestellt.

Um in der Messtechnik übliche Auswertemethoden einsetzen zu können, wie beispielsweise Form- und Maßanalysen oder Soll-Ist-Vergleiche, ist es vorteilhaft, die Volumendaten in Oberflächendaten umzuwandeln. Beispielsweise können unterschiedliche Materialien eines Objekts dabei als separate Oberflächennetze (STL-Netze) dargestellt werden. So lassen sich auch interne Strukturen für die Analyse nutzen.

Zur Erstellung der Oberflächendaten sind bereits Verfahren, wie der Marching-Cube-Algorithmus, bekannt.

Beispielsweise unter der Annahme, dass unterschiedliche Materialen zu unterschiedlichen Abschwächungen der invasiven Strahlung führen und damit zu anderen Messwerten in den einzelnen Volumenelementen, kann die Oberfläche als die Grenze zwischen entsprechenden Bereichen definiert werden. Selbst bei einfachen Messobjekten, die aus einem einheitlichen Material bestehen, können die Oberflächen als die Grenzflächen vom Material des Messobjektes zum Umgebungsmaterial (Luft) bestimmt werden.

Als Oberflächendaten seien im Folgenden die Daten zu verstehen, die Oberflächen eines Objektes beschreiben, beispielsweise polygonale Oberflächennetze. Als Oberflächen des Objektes können nicht nur die Grenzflächen zwischen dem Objekt und der Umgebung, beispielsweise Luft, verstanden werden, sondern auch Grenzflächen innerhalb des Objektes zwischen unterschiedlichen Dichtebereichen, also zum Beispiel unterschiedlichen Materialien.

Bei herkömmlichen Verfahren kommt es bei der Erzeugung von Oberflächendaten basierend auf den Volumendaten häufig zu sogenannten Treppenartefakten. Das heißt, selbst in der Realität ebene Materialgrenzen weisen eine treppenförmige Struktur auf, da der Berechnung die Volumenelemente des Voxel-Modells zugrunde liegen.

Yukie Nagai, Yutaka, Ohtake, und Hiromasa Suzuki: Accurate surface extraction on CT volume using analytical gradient of FDK formula, in: 9th Conference on Industrical Computed Tomography, Padova, Italien, 13.02.2019, Seiten 1 bis 8 beschreibt ein Verfahren zur Optimierung von Isoflächen anhand von computertomographisch ermittelten Werten an dreidimensionalen Punkten eines Objektes. Aus der visuellen Darstellung der CT-Rohdaten (Sinogram) wird ein CT-Volumen erstellt, aus dem eine Isofläche extrahiert wird. Für jeden Knotenpunkt des Netzes werden Gradientenwerte in der Richtung des Gradienten des CT-Wertes ermittelt. Die Knotenpunkte werden in Richtung des größten absoluten Gradientenwertes bewegt. Damit wird die Isofläche optimiert.

Aufgabe der vorliegenden Erfindung ist es, ein verbessertes Verfahren zu schaffen, um aus den Messdaten einer computertomografischen Messung Oberflächendaten zu erzeugen.

Diese Aufgabe wird mit einem Verfahren mit den Merkmalen des Anspruchs 1 und einer Vorrichtung mit den Merkmalen des Anspruchs 7 gelöst. Vorteilhafte Ausführungsformen sind in den Unteransprüchen beschrieben.

Es wird vorgeschlagen, bei der Oberflächenfindung nicht nur die Volumendaten zu verwenden, sondern auch die Projektionsbilder für die Berechnung der Oberflächenpunkte mit einzubeziehen.

Das Verfahren umfasst die folgenden Schritte:
I) Erstellen eines ersten Volumenmodells mit den Projektionsbildern;
II) Erzeugen eines ersten Oberflächennetzes mit Knotenpunkten basierend auf dem Volumenmodell;
III) Optimieren der Oberflächen des Oberflächennetzes unter Zuhilfenahme von mit der Detektoreinheit erfassten Projektionsbildern.

Erfindungsgemäß umfasst der Schritt III) dabei die folgenden Schritte:
a) Festlegen von Hilfspunkten zu einem Knotenpunkt des Oberflächennetzes
b) erneute Rekonstruktion an den Hilfspunkten auf Basis der Projektionsbilder
c) Auswerten der Rekonstruktion an den Hilfspunkten und Erzeugung einer angepassten Position des Knotenpunktes des Oberflächennetzes.

Der Schritt III) kann dabei mehrfach ausgeführt werden, um die Oberflächendaten weiter zu optimieren. Bevorzugt wird er so oft wiederholt, bis ein vordefiniertes Abbruchkriterium erreicht ist.

Der Schritt III) wird für eine beliebig definierte Menge an Knotenpunkten des Oberflächennetzes wiederholt. Die definierte Menge kann dabei nur einen, mehrere oder auch alle Knotenpunkte des Oberflächennetzes umfassen.

Auch ist es unerheblich, ob die Schritte a) bis c) erst für einen Knotenpunkt mehrfach oder bis zum Abbruchkriterium durchgeführt werden und erst dann der Verfahrensschritt III) für einen weiteren Knotenpunkt gestartet wird, oder ob eine Ausführung wechselnd für verschiedene Knotenpunkte oder sogar gleichzeitig erfolgt.

Zur Vorbereitung wird in Schritt I) ein Volumenmodell in Form eines 3D-Rasters an Grauwerten aus den Projektionsbildern einer computertomografischen Vermessung rekonstruiert. Die computertomografische Vermessung kann dabei als reale Messung durchgeführt werden. Es ist aber auch denkbar, die computertomografische Vermessung rechnergestützt zu simulieren.

Beispielsweise kann zum Erstellen des Volumenmodells die Methode der gefilterten Rückprojektion (filtered back-projection (FBP)) zum Einsatz kommen. In den einzelnen Voxeln des Volumenmodells können dann Grauwerte gespeichert sein, die die Dichte des Materials widerspiegeln.

In Schritt II) werden mit Hilfe eines geeigneten Volumenimportverfahrens basierend auf dem Volumenmodell aus Schritt I) erste Oberflächendaten bestimmt. Die Oberflächendaten sind vorteilhafterweise ein Oberflächennetz, das eine polygonale Oberfläche darstellt. Häufig wird dazu eine Vielzahl von Dreiecken verwendet, die an Knotenpunkten Ki aneinander treffen. Das Verfahren ist aber nicht auf die Verwendung von Dreiecken eingeschränkt.

Ein Beispiel für ein mögliches Volumenimportverfahren ist der Marching-Cube-Algorithmus.

In Schritt III) werden die Oberflächendaten durch eine Veränderung der Positionen P(Ki) einer oder mehrerer Knotenpunkte Ki optimiert. Zur Bestimmung der veränderten Knotenpunktposition P(Ki) werden zu einem Knotenpunkt Ki Hilfspunkte Hj (Ki) außerhalb der Oberflächendaten definiert. An diesen dreidimensionalen Hilfspunkten Hj (Ki) wird die Dichte des Materials, bzw. eines die Dichte repräsentierenden Grauwertes, bestimmt und daraus eine neue Position P`(Ki) für einen Knotenpunkt festgelegt.

Bereits bekannt sind Verfahren, die die Dichte bzw. den Grauwert an einem Punkt, also beispielsweise einem Hilfspunkt, aus den Dichte- bzw. Grauwerten von benachbarten Knotenpunkten interpolieren. Diese benachbarten Knotenpunkte und ihre Dichte- bzw. Grauwerte stammen dabei beispielsweise aus einem Marching-Cube-Verfahren. Dabei pflanzen sich Ungenauigkeiten, die bei der Erstellung des Volumenmodells in Schritt I sowie des Volumenimportverfahrens in Schritt II) vorhanden sind, weiter fort. Das erfindungsgemäße Verfahren setzt daher an dieser Stelle an den ausgewählten Hilfspunkten Hj (Ki) auf eine Rekonstruktion auf Basis der Messdaten, das heißt die Dichte- bzw. Grauwerte werden direkt an den Hilfspunkten Hj (Ki) aus den Messdaten (Projektionsbildern) berechnet, beispielsweise mittels gefilterter Rückprojektion (FBP).

Üblicherweise wird diese Rekonstruktion einen höheren Rechenaufwand und damit einen höheren Zeitaufwand hervorrufen als eine Interpolation der Dichte- bzw. Grauwerte von benachbarten Knotenpunkten, dafür liefert die direkte Rekonstruktion aber in der Regel genauere Werte. Beispielsweise können bei der Rekonstruktion die im Interpolationsverfahren üblichen Annahmen, wie beispielsweise die Annahme einer linearen Dichteänderung, entfallen.

Die verwendeten Hilfspunkte Hj (Ki) können auf verschiedene Weise definiert werden.

Besonders vorteilhaft ist es, wenn die Hilfspunkte Hj (Ki) eines Knotenpunktes Ki entlang einer Normalen-Richtung des Knotenpunktes Ki gewählt werden. Beispielsweise kann eine Anzahl von n Hilfspunkten gewählt werden, die beispielsweise ein m-faches einer Voxellänge vom Knotenpunkt entfernt liegen. m kann dabei nicht nur ganzzahlige Werte annehmen.

Statt der Auswahl der Hilfspunkte entlang einer Normalen-Richtung können die Hilfspunkte aber auch entlang einer anderen Funktionskurve gewählt werden. Selbst eine freie Wahl der Hilfspunkte in einem Umgebungsvolumen des Knotenpunktes ist denkbar. Diese freie Wahl kann dabei sowohl manuell durch einen Anwender erfolgen als auch automatisiert beispielsweise über eine geeignete computerimplementierte Zufallsfunktion.

Ist die Rekonstruktion an den Hilfspunkten Hj (Ki) erfolgt, so kann auf Basis der damit vorliegenden Grau- bzw. Dichtewerte an den Hilfspunkten Hj (Ki) eine neue Position P`(Ki) für den dazu gehörenden Knotenpunkt Ki bestimmt werden.

Durch die Änderung der Position eines Knotenpunktes ändert sich entsprechend auch das Oberflächennetz.

Zur Beschleunigung des Verfahrens ist es in einer Ausführungsform vorgesehen, einen zusätzlichen Schritt zwischen den Schritten II) und III) durchzuführen, in dem das erste Oberflächennetz voroptimiert wird, indem an gewählten Hilfspunkten die Dichte- bzw. Grauwerte basierend auf den Dichte- und Grauwerten von benachbarten Knotenpunkten interpoliert werden, die im Volumenimportverfahren ermittelt wurden. Damit werden geänderte Positionen für die Knotenpunkte des Oberflächennetztes bestimmt. Nach der Voroptimierung wird dann der Verfahrensschritt III) auf die voroptimierten Oberflächendaten angewendet.

Vorteilhafterweise kann das Verfahren auch verwendet werden, um Objektoberflächen in Schnittbildern zu bestimmen. Dazu kann in einem Zwischenschritt das in Schritt I erstellte erste Volumenmodell mit einer Ebene geschnitten werden. Das durch den Schnitt entstandene Volumenmodell tritt dann für die weitere Ausführung des Verfahrens an die Stelle des ursprünglichen ersten Volumenmodells, sodass danach mit Schritt II fortgefahren werden kann.

Die Erfindung wird nachfolgend anhand von nicht einschränkenden Ausführungsbeispielen mit den beigefügten Zeichnungen näher erläutert. Es zeigt:
- Figur 1: - schematische Darstellung einer Teils einer Objektoberfläche vor einer Optimierung;
- Figur 2: - schematische Darstellung einer Teils einer Objektoberfläche nach einer Optimierung;
- Figur 3: - Veranschaulichung der Positionsänderung eines Knotenpunktes im Zuge der Optimierung;
- Figur 4: - schematische Darstellung einer beispielhaften Vorrichtung zur computertomografischen Vermessung eines Objektes und zum Erzeugen von Oberflächendaten.

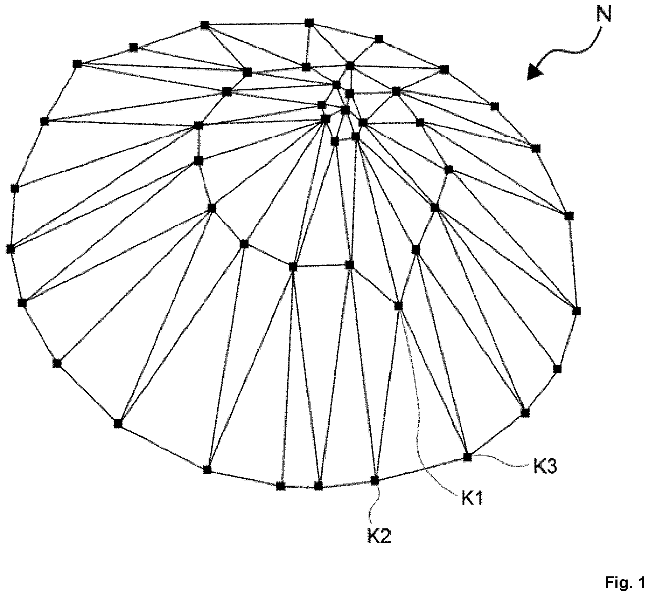

Figur 1 zeigt ein beispielhaftes Oberflächennetz N eines Ausschnittes eines Objektes. Das Objekt sei zur Vereinfachung aus einem Material, sodass die in diesem Beispiel zu bestimmende Oberfläche die Grenzfläche von Objektmaterial zu Luft ist. Das Verfahren ist aber auch auf Grenzflächen zwischen anderen Materialien anwendbar.

Dargestellt ist ein kegelförmiger Oberflächenbereich, der aus dem Objekt herausragt. Das Kegelinnere besteht also aus dem Material des Objektes.

Das dargestellte Oberflächennetz N veranschaulicht eine Oberfläche, die mit einem Volumenimportverfahren aus Messdaten (Projektionsbildern) einer computertomografischen Vermessung erzeugt wurde.

Die Oberfläche wird mit Hilfe einer Vielzahl von Dreiecken beschrieben, die an Knotenpunkten Ki aneinander treffen. Aus Gründen der Übersichtlichkeit sind in der Figur 1 nur beispielhaft drei der Knoten K1, K2 und K3 mit einer Kennzeichnung versehen. Die Knotenpunkte K1, K2 und K3 befinden sich dabei an einer Position P(K1), P(K2), P(K3).

Die Auswahl der Knotenpunkte dient hier nur der Veranschaulichung und ist nicht einschränkend zu verstehen.

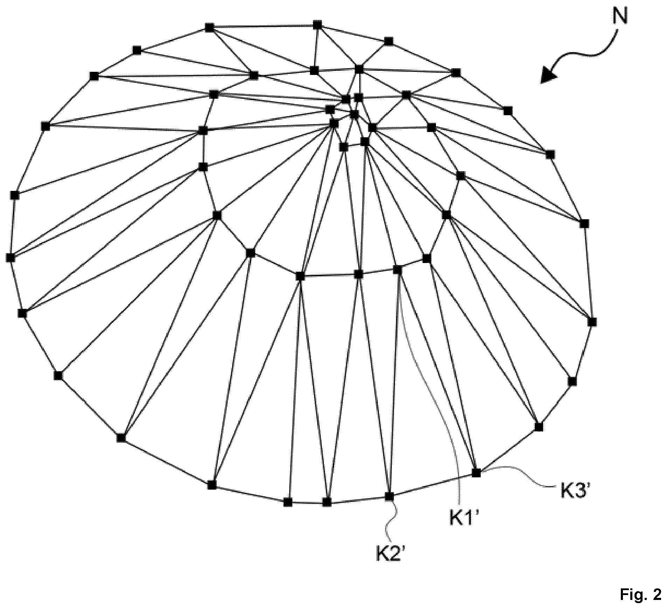

Figur 2 zeigt eine schematische Darstellung des kegelförmigen Oberflächenbereiches, nachdem eine iterative Oberflächenoptimierung unter Zuhilfenahme der Projektionsbilder stattgefunden hat. Infolge der Durchführung des Verfahrens befinden sich die Knotenpunkte K1, K2 und K3 nicht mehr an den ursprünglichen Positionen P(K1), P(K2), P(K3) aus Figur 1, sondern an den veränderten Positionen P`(K1), P`(K2) und P`(K3) und daher hier mit den Bezeichnungen K1', K2' und K3' versehen.

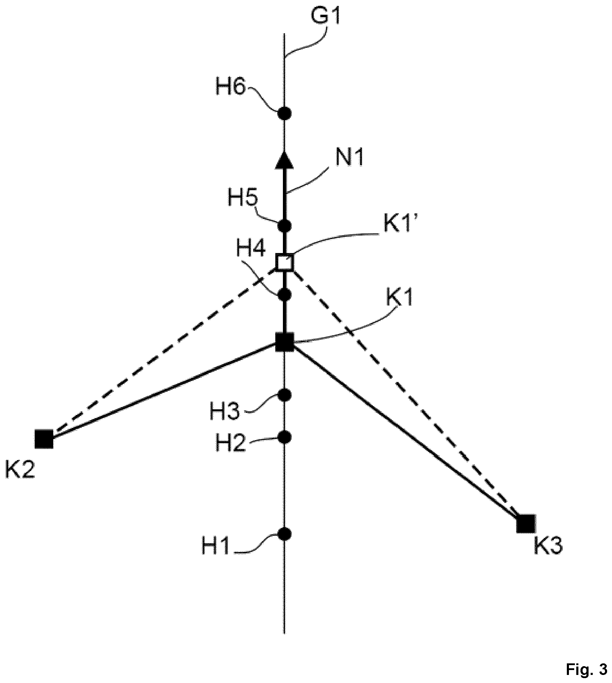

Die Durchführung des Optimierungsschrittes wird in Figur 3 veranschaulicht.

Für den Knotenpunkt K1 wurde eine Normalen-Richtung bestimmt, die durch den Pfeil N1 veranschaulicht wird. Entlang einer Geraden G1, die in Normalen-Richtung verläuft, werden Hilfspunkte H1 (K1), H2 (K1), H3 (K1), H4 (K1), H5 (K1) und H6 (K1) festgelegt. Da in dieser Figur nur auf den Knotenpunkt K1 Bezug genommen wird, seien die Hilfspunkte vereinfacht nur mit H1 bis H6 bezeichnet.

An diesen Hilfspunkten H1 bis H6 werden mit Hilfe eines beliebigen Rekonstruktionsalgorithmus aus den Projektionsbildern einer computertomografischen Vermessung Werte bestimmt, die die Dichte des Materials des Objektes an diesen Punkten repräsentieren.

Anhand der ermittelten Dichte aller dieser Hilfspunkte kann dann eine optimierte Position P (K1) bestimmt werden.

Beispielsweise sei angenommen, dass die Hilfspunkte H1 und H2 sich im Inneren des Objektes befinden, da sie in negativer Richtung entlang der Normalen G1 liegen.

Die Hilfspunkte H5 und H6 seien als außerhalb des Objektes angenommen. Damit kann beispielsweise das Maximum der Dichte an den beiden Punkten H1 und H2 als die Dichte des Objektmaterials und das Minimum der Dichte der Hilfspunkte H5 und H6 als die Dichte der Umgebung angenommen werden.

Damit können Schwellwerte definiert werden, die den inneren und äußeren Bereich kennzeichnen.

Die ermittelten Dichte-Werte an den Hilfspunkten H3 und H4 können jetzt genutzt werden, um eine Position entlang der Normalen zu definieren, an der der Materialübergang angenommen wird. Diese ermittelte Position wird dem Knotenpunkt K1 als seine veränderte Position P'(K1) zugewiesen und der Knotenpunkt ist in seiner neuen Position mit K1' in der Figur gekennzeichnet.

Zur Veranschaulichung der Änderung der Oberfläche durch die Oberflächenoptimierung nach Schritt III) des Verfahrens sind in Figur 3 beispielhaft die Verbindungslinien von Knotenpunkt K1 zu benachbarten Knotenpunkten K2 und K3 durchgezogen dargestellt. Nachdem die Position des Knotenpunktes K1 optimiert wurde, ergeben sich für diese optimierte Position (K1') die gestrichelt dargestellten Verbindungslinien zu den benachbarten Knotenpunkten K2 und K3.

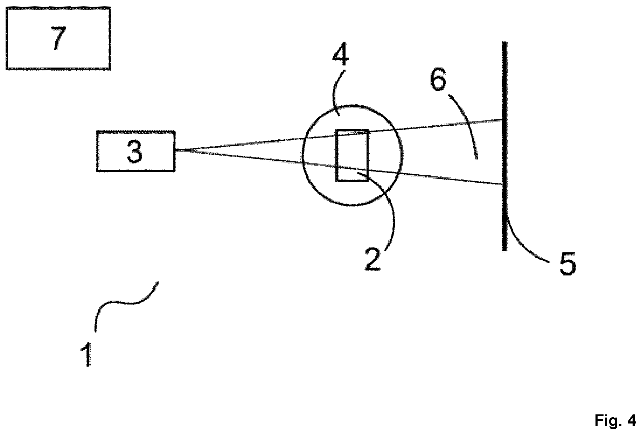

Figur 4 zeigt einen schematischen Aufbau einer beispielhaften Ausführungsform einer Vorrichtung 1 zur computertomografischen Vermessung eines Objektes 2 und zur Durchführung eines Verfahrens zur Erzeugung von Oberflächendaten eines Objektes 2.

Die Vorrichtung 1 hat eine Strahlungsquelle 3 (Quelle invasiver Strahlung, zum Beispiel eine Röntgenquelle), eine Positionierungsvorrichtung 4 zur Positionierung und Bewegung des Objektes 2 (Manipulationssystem, beispielsweise ein Drehtisch) und eine Detektoreinheit 5 (beispielsweise ein Flat-Panel-Detektor).

Um ein Objekt 2 computertomografisch zu vermessen, wird dieses beispielsweise mit Hilfe der Positionierungsvorrichtung 4 im Strahlengang 6 zwischen der Strahlungsquelle 3 und der Detektoreinheit 5 positioniert. Es werden mit Hilfe der Detektoreinheit 5 Projektionsbilder in unterschiedlichen Positionen des Objektes 2 aufgenommen, beispielsweise indem das Objekt 2 mit Hilfe des Drehtisches 4 zwischen den Aufnahmen um einen vorgegebenen Winkel gedreht wird.

Des Weiteren ist eine Auswerteeinheit 7 vorhanden. Die Auswerteeinheit 7 ist zur Ausführung geeigneter Programmcodemittel geeignet, um ein Verfahren zur Erzeugung von Oberflächendaten eines Objektes 2 mit Projektionsbildern, die durch computertomografische Vermessung des in den Strahlengang 6 zwischen der Strahlungsquelle 3 und der Detektoreinheit 5 positionierten Objektes 2 erfasst wurden, auszuführen.

Die hier dargestellte Ausführungsform mit einer getrennten Auswerteeinheit 7 ist beispielhaft. Es sind weitere Ausführungsformen möglich. Beispielsweise kann die Auswerteeinheit 7 auch in die Vorrichtung 1 integriert sein. Vorteilhafterweise ist die Auswerteeinheit 7 in eine Steuereinheit, die zur Steuerung der computertomografischen Vermessung geeignet ist, integriert.

## Patentansprüche

1. Verfahren zur Erzeugung von Oberflächendaten eines Objektes (2) mit Projektionsbildern, die durch computertomografische Vermessung des in den Strahlengang (6) zwischen einer Strahlungsquelle (3) und einer Detektoreinheit (5) positionierten Objektes (2) erfasst wurden, mit den Schritten
I) Erstellen eines ersten Volumenmodells mit den Projektionsbildern;
II) Erzeugen eines ersten Oberflächennetzes (N) mit Knotenpunkten basierend auf dem Volumenmodell;
III) Optimieren der Oberflächen des Oberflächennetzes (N) unter Zuhilfenahme von mit der Detektoreinheit (5) erfassten Projektionsbildern,
**dadurch gekennzeichnet, dass**
das Optimieren der Oberflächen unter Zuhilfenahme der Projektionsbilder (Schritt III) die folgenden Schritte umfasst
a) Festlegen von Hilfspunkten zu einem Knotenpunkt des Oberflächennetzes (N);
b) erneute Rekonstruktion an den Hilfspunkten auf Basis der Projektionsbilder;
c) Auswerten der Rekonstruktion an den Hilfspunkten und Erzeugung einer angepassten Position des Knotenpunktes des Oberflächennetzes (N).

2. Verfahren nach Anspruch 1, **dadurch gekennzeichnet, dass** das Optimieren der Oberflächen (Schritt III) mehrfach ausgeführt wird, bis ein vordefiniertes Abbruchkriterium erreicht ist.

3. Verfahren nach Anspruch 1 oder 2, **dadurch gekennzeichnet, dass** die Verfahrensschritte a) bis c) für mehr als einen Knotenpunkt des Oberflächennetzes (N) durchgeführt werden.

4. Verfahren nach einem der Ansprüche 1 bis 3, **dadurch gekennzeichnet, dass** in Schritt a) die Hilfspunkte des Knotenpunktes entlang einer Normalen-Richtung des Knotenpunktes oder entlang einer Funktionskurve gewählt werden.

5. Verfahren nach einem der Ansprüche 1 bis 3, **dadurch gekennzeichnet, dass** in Schritt a) die Hilfspunkte des Knotenpunktes frei im Raum gewählt werden.

6. Verfahren nach einem der vorhergehenden Ansprüche, **dadurch gekennzeichnet, dass** nach Schritt II) eine Voroptimierung des Oberflächennetzes (N) stattfindet, bei der Dichte- bzw. Grauwerte an Hilfspunkten aus den Dichte- bzw. Grauwerten benachbarter Knotenpunkte interpoliert werden und erst dann in Schritt III) die Oberflächenoptimierung unter Zuhilfenahme der Projektionsbilder erfolgt.

7. Vorrichtung zur computertomografischen Vermessung eines Objektes (2) mit einer Strahlungsquelle (3), einer Detektoreinheit (5) und einer Auswerteeinheit (7), wobei die Vorrichtung zur Erfassung von Projektionsbildern des in den Strahlengang (6) zwischen der Strahlungsquelle (3) und der Detektoreinheit (5) positionierten Objektes (2) eingerichtet ist, **dadurch gekennzeichnet, dass** die Auswerteeinheit (7) zur Durchführung eines Verfahrens nach einem der Ansprüche 1 bis 6 eingerichtet ist.

## Claims

1. Method for generating surface data of an object (2) with projection images which were acquired by computer tomographic measurement of the object (2) positioned in the beam path (6) between a radiation source (3) and a detector unit (5), comprising the steps of
I) creating a first volume model with the projection images;
II) generating a first surface mesh (N) with nodes based on the volume model;
III) optimising the surfaces of the surface mesh (N) with the aid of projection images captured by the detector unit (5),
**characterised in that**
the optimisation of the surfaces with the aid of the projection images (step III) comprises the following steps:
a) defining auxiliary points for a node of the surface network (N);
b) repeated reconstruction at the auxiliary points on the basis of the projection images;
c) evaluating the reconstruction at the auxiliary points and generating an adapted position of the node of the surface mesh (N).

2. Method according to claim 1, **characterised in that** the optimisation of the surfaces (step III) is carried out several times until a predefined termination criterion is reached.

3. Method according to claim 1 or 2, **characterised in that** the method steps a) to c) are carried out for more than one node of the surface network (N).

4. Method according to one of claims 1 to 3, **characterised in that** in step a) the auxiliary points of the node are selected along a normal direction of the node or along a function curve.

5. Method according to one of claims 1 to 3, **characterised in that** in step a) the auxiliary points of the node are selected freely in space.

6. Method according to one of the preceding claims, **characterised in that** after step II), a preliminary optimisation of the surface mesh (N) takes place, in which density or grey values at auxiliary points are interpolated from the density or grey values of neighbouring nodal points and only then in step III) is the surface optimisation carried out with the aid of the projection images.

7. Device for computed tomographic measurement of an object (2) with a radiation source (3), a detector unit (5) and an evaluation unit (7), wherein the device is set up to detect projection images of the object (2) positioned in the beam path (6) between the radiation source (3) and the detector unit (5), **characterised in that** the evaluation unit (7) is set up to carry out a method according to one of claims 1 to 6.

## Revendications

1. Procédé de génération de données de surface d'un objet (2) avec des images de projection qui ont été acquises par mesure tomographique par ordinateur de l'objet (2) positionné dans le chemin optique (6) entre une source de rayonnement (3) et une unité de détection (5), comprenant les étapes consistant à
I. créer un premier modèle volumique avec les images de projection ;
II. créer un premier réseau de surface (N) avec des points nodaux en se basant sur le modèle volumique ;
III. optimiser les surfaces du réseau de surface (N) à l'aide des images de projection acquises par l'unité de détection (5),
**caractérisé en ce que**
l'optimisation des surfaces à l'aide des images de projection (étape III) comprend les étapes suivants :
a) définition de points auxiliaires relatifs à un point nodal du réseau de surface (N) ;
b) nouvelle reconstruction aux points auxiliaires sur la base des images de projection ;
c) évaluation de la reconstruction aux points auxiliaires et génération d'une position adaptée du point nodal du réseau de surface (N).

2. Procédé selon la revendication 1, **caractérisé en ce que** l'optimisation des surfaces (étape III) est effectuée plusieurs fois jusqu'à ce qu'un critère d'interruption prédéfini soit atteint.

3. Procédé selon la revendication 1 ou 2, **caractérisé en ce que** les étapes a) à c) du procédé sont exécutées pour plus d'un point nodal du réseau de surface (N).

4. Procédé selon l'une des revendications 1 à 3, **caractérisé en ce que,** à l'étape a), les points auxiliaires du point nodal sont choisis le long d'une direction normale du point nodal ou le long d'une courbe fonctionnelle.

5. Procédé selon l'une des revendications 1 à 3, **caractérisé en ce que,** à l'étape a), les points auxiliaires du point nodal sont choisis librement dans l'espace.

6. Procédé selon l'une des revendications précédentes, **caractérisé en ce que,** après l'étape II), une pré-optimisation du réseau de surface (N) a lieu, lors de laquelle les valeurs de densité ou de gris aux points auxiliaires sont interpolées à partir des valeurs de densité ou de gris de points nodaux voisins, et ce n'est qu'ensuite, à l'étape III), que l'optimisation des surfaces a lieu à l'aide des images de projection.

7. Dispositif de mesure tomographique par ordinateur d'un objet (2), comprenant une source de rayonnement (3), une unité de détection (5) et une unité d'évaluation (7), le dispositif étant conçu pour acquérir des images de projection de l'objet (2) positionné dans le chemin optique (6) entre la source de rayonnement (3) et l'unité de détection (5), **caractérisé en ce que** l'unité d'évaluation (7) est conçue pour mettre en oeuvre un procédé selon l'une des revendications 1 à 6.
